## Europäisches Patentamt

## European Patent Office

## Office européen des brevets

(11) Veröffentlichungsnummer: **0 130 393**
A2

(12) # EUROPÄISCHE PATENTANMELDUNG

(21) Anmeldenummer: **84106320.9**

(51) Int. Cl.⁴: **B 65 G 69/28**

(22) Anmeldetag: **02.06.84**

(30) Priorität: **04.07.83 DE 3324005**

(43) Veröffentlichungstag der Anmeldung: **09.01.85**
**Patentblatt 85/2**

(84) Benannte Vertragsstaaten: **AT BE CH DE FR GB IT LI LU NL SE**

(71) Anmelder: **Alten, Kurt, Ringstrasse 14, D-3015 Wennigsen (DE)**

(72) Erfinder: **Alten, Kurt, Ringstrasse 14, D-3015 Wennigsen (DE)**

(74) Vertreter: **Depmeyer, Lothar, Auf der Höchte 30, D-3008 Garbsen 1 (DE)**

(54) **Überladebrücke für Rampen.**

(57) Die Erfindung geht aus von Brücken dieser Art, die mit einer klappbaren Verlängerung am vorderen Ende ihrer schwenkbaren Brückenplatte versehen sind und über ein Getriebe verfügen, das beim Hochschwenken der Brückenplatte die Verlängerung nach außen in die Betriebsstellung klappt. Um die Brückenplatte genau austarieren zu können und die Verlängerung in ihrer Wirkstellung zu halten, hat das Getriebe ein ein Zurückklappen der Verlängerung unterbindendes Gesperre, das von oben her von Hand gelöst werden kann. Das Gesperre hat einen Gewichtshebel, der die Sperre aufrechterhält und zum Aufheben der Sperre verschwenkt werden kann z.B. mit einer Kette von der Oberseite der Brücke her.

## Überladebrücke für Rampen

Die Erfindung betrifft eine Überladebrücke für Rampen mit einer an ihrem hinteren Ende um eine waagerechte Achse an der Rampe schwenkbar gelagerten Brückenplatte, die an ihrem vorderen Ende mit einer von der etwa senkrechten Ruhestellung aus in die etwa waagerechte Arbeitsstellung ausklappbaren Verlängerung zum Auflagen und Abstützen der Brücke auf der be- bzw. entladenden Plattform vensehen ist, wobei das Ausklappen der Verlängerung durch eine sich etwa in Längsrichtung der Brücke erstreckende Schubstange erfolgt, die an ihrem hinteren Ende am freien Ende eines Hebels ( der Bestandteil einer Scheibe sein kann ) geführt ist, der um eine waagerechte Achse verschwenkbar ist und durch ein biegsames Zugglied betätigbar ist, welches mit einem Ende an der Rampe verankert ist und mit dem anderen Ende mit dem Hebel so in Wirkverbindung steht, dass sich das Zugglied beim Hochschwenken der Brückenplattestrafft und dabei die Hebelverschwenkung bzw. eine Klappbewegung der Verlängerung bewirkt.

Es ist bekannt, die klappbar angeordnete Verlängerung mit einem Gegengewicht derart auszustatten, dass sie sich in der Betriebsstellung durch Gewichtsverlagerung hält, also diese Stellung innehält. Die Anbringung eines solchen Gewichts hat jedoch den Nachteil, dass ein Austarieren der Brückenplatte mit Schwierigkeiten verbunden ist. Angesichts der Forderung, dass die Überladebrücke stets mit einer geringen Kopflastigkeit versehen sein muss, damit sie evtl. Bewegungen der Fahrzeuge od. dgl. folgen kann, lässt sich eine feinfühlige Kopflastigkeit dann nicht einstellen, wenn die vorerwähnte Gewichtsverlagerung beim Klappen der Verlängerung eintreten muss. Unter diesen Voraussetzungen muss eine vergleichsweise grosse Kopflastigkeit gewählt werden, die jedoch ein Verschwenken von Hand erschwert.

Der Erfindung liegt im wesentlichen die Aufgabe zugrunde, die eingangs erwähnten Überladebrücken so auszuführen, dass eine besonders feinfühlige Kopflastigkeit einstellbar und demgemäss eine Betätigung der Brücke mit geringen Kräften möglich ist.

Zur Lösung dieser Aufgabe ist erfindungsgemäss das Getriebe zum Klappen der Verlängerung mit einer von Hand lösbaren Sperre für die Betriebsstellung der Verlängerung vorgesehen, und zwar vorzugsweise eine Sperre, die ein Zurückklappen der Verlängerung von der Betriebsstellung in die etwa senkrechte Ruhestellung verhindert.

0130393

Vorzugsweise wird dabei die Erfindung bei solchen Brücken angewendet, bei denen das Zugglied brückenseitig auf eine kreisförmige Bahn bzw. einen trommelartigen Körper aufläuft. In Verfolg des Erfindungsgedankens wird dabei durch die Sperre ein Zurückdrehen dieses Körpers unterbunden.

Ist in der Betriebsstellung der Überladebrücke die Sperre eingelegt, so verhält sich die damit gesperrte Verlängerung wie eine starr verbundene Verlängerung, und nunmehr ist es ausreichend, eine kleine Kopflastigkeit zu wählen; dies hat wiederum geringe Betätigungskräfte zur Folge, wenn die Bedienungsperson die Brücke nach oben z.B. in eine Stellung geklappt haben möchte, in der die Verlängerung aufgrund des Zuggliedes in die Betriebsstellung geschwenkt wird.

Weitere Einzelheiten der Erfindung werden anhand der Zeichnung erläutert, in der ein Ausführungsbeispiel der Erfindung dargestellt ist. Es zeigen :

Fig. 1 einen senkrechten Längsmittelschnitt durch eine in der Ruhestellung befindliche Überladebrücke für Rampen,

Fig. 2 einen senkrechten Teillängsmittelschnitt durch die Brücke nach Fig. 1, jedoch mit ausgeklappter Verlängerung und

Fig. 3 einen senkrechten Teillängsschnitt durch die Kopfseite der Brücke nach Fig. 1 und 2, jedoch entlang einer Linie, die hinter der Mittellinie bzw. im Randbereich der Brücke sich befindet, jedoch parallel zur Längsmittellinie verläuft.

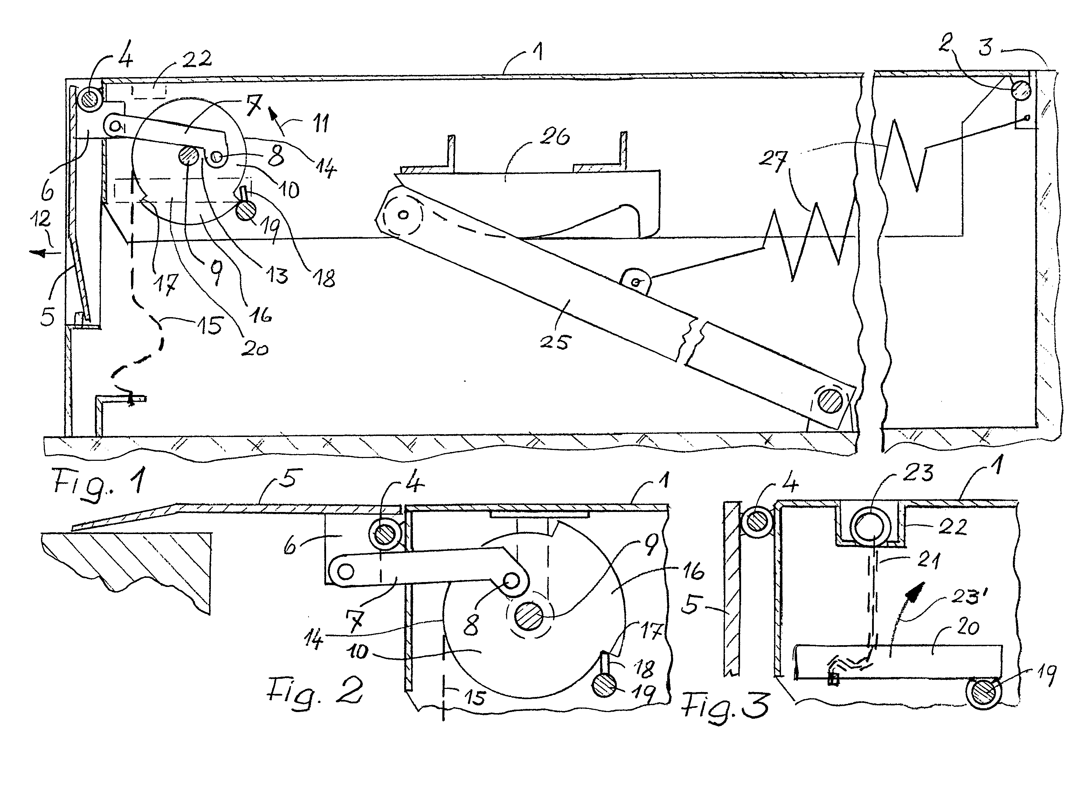

Die Brückenplatte 1 ist an ihrem hinteren Ende um eine waagerechte Achse 2 an der Rampe 3 gelagert. Von der Ruhestellung gemäss Fig. 1 aus kann die Brückenplatte 1 nach oben oder nach unten verschwenkt werden. Um diese Verschwenkbewegung zu erleichtern, ist die Brückenplatte 1 durch Mittel unterfangen und unterstützt, die noch beschrieben werden.

Am freien Ende der Brückenplatte 1 befindet sich eine um eine waagrechte Achse 4 verschwenkbare Verlängerung 5, die sich gemäss Fig. 1 und 3 in der Ruhestellung ( etwa senkrecht angeordnet ) und durch Herausklappen in eine Ebene schwenkbar ist, die durch die Brückenplatte 1 bestimmt ist. Die Arbeitsstellung geht aus Fig. 2 hervor, bei der sich die Brückenplatte 1 über die Verlängerung 5 auf einer zu be- bzw- entladenden Plattform a abstützt.

Mit der Wurzel der Verlängerung 5 ist ein Hebel 6 verbunden, der mit einer sich nach hinten in Richtung der Brückenlängsrichtung erstreckenden Schubstange 7 gelenkig verbunden ist. Hinten ist die Schubstange 7 an einem Zapfen 8 angelenkt, der sich an einer um eine waagerechte Achse 9 verschwenkbaren Scheibe 1o befindet. Wird die Scheibe 1o im Sinne des Pfeiles 11 gedreht, so versteht es sich, dass dann die Verlängerung 5 im Sinne des Pfeiles 12 ausgeklappt wird.

Zwischen der Schubstange 7 und der Achse 9 ist somit
ein Hebelarm bei 13 wirksam. Aussen wird die Scheibe 1o
durch einen kreisbogenförmigen Mantel 14 begrenzt, auf
dem ein zugfestes Seil 15 aufliegt, das an seinem unteren
Ende am Fundament der Rampe 3 befestigt ist, wobei es
versteht, dass das andere Ende an der Scheibe 1o zu befestigen ist. Durch den Mantel 14 ergibt sich auch für den
Angriff des Seiles 15 über den gesamten Schwenkbereich
der Scheibe 1o ein konstanter Hebelarm.

Wird die Brückenplatte 1 von der Stellung gemäss Fig. 1
nach oben verschwenkt, so wird das Seil 15 gestrafft,
womit die Verlängerung 5 in die Stellung gemäss Fig. 2
gelangt. In der Stellung gemäss Fig. 1 ist der untere
Teil des Seiles 15 so gelockert, dass eine Straffung
natürlich erst dann eintritt, wenn die Brückenplatte 1
eine nach oben zeigende Schrägstellung eingenommen hat.

Um die Verlängerung 5 in der Betriebsstellung gemäss
Fig. 2 festzuhalten, also ein Zurückklappen zu unterbinden, hat die Scheibe 1o etwa auf einem Viertel ihres
Umfangs einen kreisbogenförmigen Vorsprung 16 mit einer
hinten liegenden Anschlagfläche 17.

In der Stellung gemäss Fig. 2 liegt diese Anschlagfläche 17
an einem Vorsprung 18 einer sich quer zur Brückenplatte 1
erstreckenden Achse 19. Gemäss Fig. 3 ist diese Achse
am Brückenrand mit Gewichtshebel 2o fest verbunden, der
sich in Brückenlängsrichtung erstreckt. An diesem
Hebel greift eine Kette 21 an, welche am oberen Ende
an einem in einer Vertiefung 22 der Brückenplatte 1
angeordneten Ring 23 befestigt ist. Dieser Ring 23
kann von der Oberseite der Brückenplatte 1 aus von Hand
erfasst werden, um so die Kette 21 zu straffen und dann

0130393

den Gewichtshebel 2o in Richtung des Pfeiles 23' nach oben zu verschwenken, womit der Vorsprung 18 ausser Eingriff kommt und erst dann die Scheibe 1o die Möglichkeit gibt, die Verlängerung 5 nach unten klappen zu lassen, was aufgrund des Eigengewichtes dieser Verlängerung 5 geschehen kann. Für den Fall des Eingriffes des Vorsprunges 18 und der damit erreichten Sperrung der Scheibe 1o ist die Verlängerung 5 in der Betriebsstellung gemäss Fig. 2 gehalten und an einer Bewegung nach unten gehindert.

Die Brückeplatte 1 ist durch einen unten am Fundament angelenkten Hebel 25 unterfangen, der mit seinem freien Ende eine Kurvenscheibe 26 an der Unterseite der Brückenplatte 1 anliegt und unter der Wirkung einer Zugfeder 27 steht in der Weise, dass damit das Gewicht der Brückenplatte 1 mit Verlängerung 5 im wesentlichen abgefangen wird, um so eine Verschwenkung der Brückenplatte 1 von Hand zu erleichtern. Die Federspannung ist jedoch so eingestellt, dass noch eine geringe Kopflastigkeit der Brückenplatte 1 verbleibt, damit die Verlängerung 5 einer Senkbewegung der Plattform a z.B. beim Beladen folgen kann.

Wichtig ist, dass der Gewichtshebel 2o derart auf die Achse 19 einwirkt, dass deren Vorsprung 18 stets die Sperrstellung gemäss Fig. 2 einhalten möchte, und zwar durch den Einfluss des Gewichtes des Gewichtshebels. Das Gewicht des Gewichtshebels 2o muss also durch Ziehen der Kette 21 überwunden werden, um den Vorsprung 18 verschwenken und ausser Eingriff bringen zu können.

A n s p r ü c h e

1. Überladebrücke für Rampen mit einer an ihrem hin-tern Ende um eine waagerechte Achse an der Rampe schwenkbar gelagerten Brückenplatte, die an ihrem vorderen Ende mit einer von der etwa senkrechten Ruhestellung aus in die etwa waagerechte Arbeitsstellung ausklappbaren Verlängerung zum Auflegen und Abstützen der Brücke auf der be- bzw. entladenden Plattform versehen ist, wobei das Ausklappen der Verlängerung durch eine sich etwa in Längsrichtung der Brücke erstreckenden Schubstange erfolgt, die an ihrem hinteren Ende am freien Ende eines Hebels ( der Bestandteil einer Scheibe sein kann ) geführt ist, der um eine waagerechte Achse verschwenkbar ist und durch ein biegsames Zugglied betätigbar ist, welches mit einem Ende an der Rampe verankert ist und mit dem anderen Ende mit dem Hebel so in Wirkverbindung steht, dass sich das Zugglied beim Hochschwenken der Brückenplatte strafft und dabei die Hebelverschwenkung bzw. eine Klappbewegung der Verlängerung bewirkt, dadurch gekennzeichnet, dass dem Getriebe mit dem Hebel ( Scheibe 1o ) und der Schubstange (7) eine das Zurückklappen der Verlängerung (5) in die Ruhestellung verhindernde, von Hand lösbare Sperre (17,18) zugeordnet ist.

2. Brücke nach Anspruch 1, dadurch gekennzeichnet, dass bei einer mit der Schubstange (7) in Verbindung stehenden Scheibe (1o) diese mit einem Vorsprung (16) im Bereich ihres Mantels versehen ist, der an seinem Ende eine Anschlagfläche (17) für einen Vorsprung (18) einer verdrehbaren Achse (19) aufweist.

0130393

3. Brücke nach Anspruch 1 und 2, dadurch gekennzeichnet, dass die Achse (19) unter der Wirkung einer ihren Vorsprung (18) in die Arbeitsstellung ( Fig. 2 ) drehenden Kraft ( Gewicht ) steht.

4. Brücke nach Anspruch 3, dadurch gekennzeichnet, dass mit der Achse (19) ein Gewichtshebel (2o) verbunden ist.

5. Brücke nach Anspruch 4, dadurch gekennzeichnet, dass der Gewichtshebel (2o) anhebbar ist und sein Betätigungsmittel (21,23) von der Oberseite der Brückenplatte (1) her bedienbar ist.

6. Brücke nach Anspruch 2, dadurch gekennzeichnet, dass der Vorsprung (16) auf der etwa zylindrischen Scheibe (1o) zumindest in etwa die Gestalt eines Kreisringsektors aufweist.

Fig. 1

Fig. 2

Fig. 3